# EUROPÄISCHE PATENTSCHRIFT

(11) **EP 2 291 104 B1**
(45) Veröffentlichungstag und Bekanntmachung des Hinweises auf die Patenterteilung: **01.05.2013**
(21) Anmeldenummer: 09765830.6
(22) Anmeldetag: 16.06.2009
(51) Int. Cl.: A47J 43/07

(54) **KÜCHENMASCHINE, INSBESONDERE ZUM KNETEN VON TEIG**
COOKING MACHINE, IN PARTICULAR FOR KNEADING DOUGH
ROBOT MÉNAGER, EN PARTICULIER POUR LE PÉTRISSAGE DE PÂTE

(30) Priorität: 20.06.2008 DE 102008029369
(43) Veröffentlichungstag der Anmeldung: 09.03.2011
(73) Patentinhaber: BSH Bosch und Siemens Hausgeräte GmbH, 81739 München (DE)
(72) Erfinder: KOVACIC, Peter, 3303 Gomilsko (SI); POGACAR, Toni, 3311 Sempeter (SI)
(86) Internationale Anmeldenummer: PCT/EP2009/057429
(87) Internationale Veröffentlichungsnummer: WO 2009/153250

(56) Entgegenhaltungen:
- CH-A- 113 167
- DE-B- 1 018 846
- DE-B- 1 234 955
- GB-A- 1 123 572

## Beschreibung

### Hintergrund der Erfindung

Die Erfindung betrifft eine Küchenmaschine mit einer Antriebseinrichtung und einer Werkzeuganordnung, insbesondere zum Kneten von Teig, mit einem ersten Werkzeug, welches mittels seines Schaftes um eine erste Drehachse drehend mit der Antriebseinrichtung der Küchenmaschine gekuppelt ist. Die Erfindung betrifft ferner eine Werkzeuganordnung für eine derartige Küchenmaschine sowie ein Verfahren zum Bearbeiten von Rührgut, insbesondere zum Kneten von Teig.

### Stand der Technik

Eine Küchenmaschine der eingangs genannten Art ist aus der Auslegeschrift DE 1 300 213 bekannt. Die Küchenmaschine besteht aus einem Gehäuse, das einen Fuß sowie einen eine Antriebseinrichtung aufnehmenden Gehäuseteil aufweist und in seitlicher Ansicht C-förmig ausgebildet ist. Auf den Fuß kann drehbar gelagert eine Rührschüssel aufgesetzt werden, welche von oben partiell von dem die Antriebseinrichtung aufnehmenden Gehäuseteil überragt wird. Ein aus diesem Gehäuseteil jenseits des Schüsseldurchmessers nach unten herausstehendes Ritzel steht mit einem den oberen Rand der Rührschüssel umgebenden Zahnkranz in Eingriff und versetzt die Rührschüssel auf Wunsch in Drehung. Ferner ragt von oben, gegenüber der Drehachse der Rührschüssel versetzt, ein wendelförmiges Knetwerkzeug bis zu deren Boden herab, welches gleichfalls mit der Antriebseinrichtung der Küchenmaschine gekuppelt ist. Bei Bestätigung der Küchenmaschine rotiert das Knetwerkzeug um seine vertikale Drehachse in der Rührschüssel, die sich ihrerseits um eine Vertikalachse in der Küchenmaschine dreht. Dabei streichen die Wendeln des Knetwerkzeugs entlang der inneren Mantelfläche und des Bodens der Rührschüssel und kneten dabei den zu bearbeitenden Teig.

In der Offenlegungsschrift DE 25 51 842 A1 wird eine gattungsgemäße Küchenmaschine offenbart, deren Fuß zur drehfesten Aufnahme einer Rührschüssel vorgesehen ist. Der obere, die Antriebseinrichtung enthaltende Gehäuseteil ist mit einer Aufnahme für unterschiedliche Werkzeuge, beispielsweise eines Knethakens oder eines Rührbesens, ausgestattet, die von oben schräg in die Rührschüssel hineinragen.

Aus der Patentschrift CH 142424 ist eine weitere Küchenmaschine nach Oberbegriff des Anspruchs 1 bekannt, bei welcher die sich, von einer flachen Standfläche abgesehen, nach unten kugelartig verjüngende Rührschüssel mittels einer am Gehäuse der Küchenmaschine vorgesehenen Hebeeinrichtung zwischen einer Gebrauchsstellung und einer Entnahmestellung verfahrbar ist. Das über eine Bajonettkupplung an die Küchenmaschine kuppelbare Rührwerkzeug weist eine im Wesentlichen halbkreisförmige Außenkontur auf, welche dem Verlauf der inneren Mantelfläche der Rührschüssel folgt und nur über einen schmalen Spalt gegenüber dieser beabstandet ist.

In den Offenlegungsschriften DE 10 2005 040 544 A1 und DE 39 32 760 A1 werden ferner Antriebseinrichtungen für Küchenmaschinen beschrieben, welche einen den Elektromotor und das Getriebe aufnehmenden Rahmen aufweisen. Ferner sind im abtreibenden Teil der Getriebe Kupplungsstellen zur Aufnahme von Rühr- oder Knetwerkzeugen vorgesehen.

Weitere Küchengeräte mit Werkzeuganordnungen sind aus der DE 101 8846B, CH 113 167 A, DE 123 495 5 B und GB 1123572 A bekannt.

Die vorbekannten Küchenmaschinen haben sich grundsätzlich bewährt. Sie weisen jedoch insbesondere beim Kneten teigartigen Rührguts den Nachteil auf, dass das Rührgut zum Aufsteigen an den sich drehenden Knetwerkzeugen sowie an der Wandung der Rührschüssel neigt und damit den die Antriebseinrichtung aufnehmenden Gehäuseteil verschmutzen kann, wodurch der Aufwand zur Reinigung der Küchenmaschine zunimmt. Darüber hinaus können sich bei der Bearbeitung in der Rührschüssel Zonen ausbilden, in denen das Rührgut unerwünscht lange ohne Bearbeitung verweilt. Dies kann zu einer Beeinträchtigung des Homogenität oder zu der Notwendigkeit einer Verlängerung des Rührvorgangs führen.

### Der Erfindung zugrundeliegende Aufgabe

Der Erfindung liegt die Aufgabe zugrunde, eine gattungsgemäße Küchenmaschine derart weiterzuentwickeln, dass das Rührgut während der Bearbeitung in der Rührschüssel verbleibt und dort zügig zu einer möglichst homogenen Masse verarbeitet wird.

### Erfindungsgemäße Lösung

Die der Erfindung zugrunde liegende Aufgabe wird bei einer Küchenmaschine mit den Merkmalen des Patentanspruchs 1 dadurch gelöst, dass die Werkzeuganordnung ein zweites Werkzeug umfasst, welches im Bereich des Schaftes des ersten Werkzeugs angeordnet ist. Während das erste Werkzeug in bekannter Weise das Rührgut in der Rührschüssel homogenisiert, ist zweite Werkzeug dazu vorgesehen, das am Schaft des ersten Werkzeug aufsteigende Rührgut abzustreifen und damit vom Gehäuse der Küchenmaschine fernzuhalten. Auf ein Abdecken der Rührschüssel durch einen die Handhabung der Küchenmaschine beeinträchtigenden Deckel sowie einen nach dem Stand der Technik üblicherweise an den Schaft des ersten Werkzeugs angeformten Teller kann somit in der Regel verzichtet werden. Darüber hinaus ist es Aufgabe des zweiten Werkzeugs, das Rührgut von der inneren Mantelfläche der Rührschüssel abzustreifen und in Richtung des ersten Werkzeugs zu fördern, so dass sich in der Rührschüssel keine Zonen ausbilden, in denen sich das Rührgut in unerwünschter Weise der Bearbeitung entziehen kann.

### Bevorzugte Ausgestaltung der Erfindung

Vorteilhafte Aus- oder Weiterbildungen, welche einzeln oder in Kombination miteinander eingesetzt werden können, sind Gegenstand der abhängigen Ansprüche.

Mit Vorteil ist das erste Werkzeug haken- oder wendelartig ausgebildet, da sich derartige, bereits im Stand der Technik beschriebene Werkzeuge zum Kneten teigartigen Rührguts über Jahrzehnte bewährt haben. Darüber hinaus sind solche Werkzeuge aufgrund ihrer Geometrie besonders dazu geeignet, mit einem zweiten Werkzeug in erfindungsgemäßer Weise zusammen zu wirken.

Das zweite Werkzeug ist bevorzugt flügelartig ausgebildet. Ein Flügel zeichnet sich dadurch aus, dass er eine verglichen mit seiner Dicke deutlich größere Tiefe aufweist. Bei der Bearbeitung hochviskosen Rührguts, insbesondere von harten Teigen, weist das zweite Werkzeug hierdurch in Richtung der hauptsächlich auftretenden Belastung eine hohe Biegesteifigkeit auf. Mit dieser Ausführung der Erfindung ist es insbesondere erreichbar, einem Verbiegen durch Kräfte, die von zwischen den Werkzeugen eingezwängtem Teig auf die Werkzeuge ausgeübt werden, entgegenzuwirken.

Grundsätzlich kann das zweite Werkzeug auch relativ zum Gehäuse der Küchenmaschine starr anordnet werden, insbesondere in Verbindung mit einer rotierenden Rührschüssel. Besonders bevorzugt ist jedoch eine Anordnung, bei welcher das zweite Werkzeug drehend mit der Antriebseinrichtung der Küchenmaschine gekuppelt ist, da hierdurch auch bei drehfesten Rührschüsseln eine erfindungsgemäße Wirkung erzielt werden kann.

Mit besonderem Vorteil ist das zweite Werkzeug um eine von der ersten Drehachse abweichende zweite Drehachse drehend angeordnet. Hierdurch wird zwar der Bauaufwand für die Küchenmaschine erhöht, die Wirkung der Werkzeuge miteinander kann jedoch besonders fein abgestimmt werden.

Nach einer ersten alternativen Ausbildung der Erfindung sind die erste und zweite Drehachse der Werkzeuge einander kreuzend ausgerichtet, wobei die Drehachse des ersten, knetenden Werkzeugs zur Optimierung des Rührergebnisses schräg und die Drehachse des zweiten, abstreifenden Werkzeugs parallel zur Wandung der Rührschüssel verläuft.

Alternativ ist vorgesehen, dass das zweite Werkzeug um eine zur ersten Drehachse parallel versetzte zweite Drehachse drehend angeordnet ist. Diese Aufbildung ist insbesondere dann bevorzugt, wenn das erste Werkzeug einem exzenterartigen Bewegungsablauf folgt, wobei beide Drehachsen in der Regel vertikal verlaufen.

Grundsätzlich ist vorstellbar, die Werkzeuge gleichsinnig, aber mit unterschiedlichen Drehzahlen zueinander rotieren zu lassen. Das Zusammenwirken zwischen erstem und zweitem Werkzeug wird jedoch dann besonders vorteilhaft beeinflusst, wenn das erste Werkzeug und das zweite Werkzeug gegenläufig drehend vorgesehen sind. Hierdurch werden auch bei geringen Drehzahlen der Werkzeuge, die in der Regel beim Kneten von Teig bevorzugt werden, vergleichsweise zügige Relativbewegungen der miteinander wirkenden Bereiche der Werkzeuge hervorgerufen. Darüber hinaus kann bei unveränderter Antriebsleistung ein hohes Drehmoment der Werkzeuge erzeugt werden.

Mit Vorteil erstreckt sich das zweite Werkzeug vom Zentrum der Rührschüssel der Küchenmaschine bis zur deren innerer Mantelfläche, so dass bei Drehung des zweiten Werkzeugs relativ zur Rührschüssel der offene Schüsselbereich weitgehend abgestrichen wird.

Weiterhin ist bevorzugt vorgesehen, dass ein oberer Bereich des ersten Werkzeugs und die Unterseite des zweiten Werkzeugs in sich überdeckender Drehstellung, nur durch einen relativ engen Spalt beabstandet, näherungsweise parallel zueinander verlaufen. Der Spalt kann beispielsweise 0,5 mm bis 5,0 mm betragen. Als besonders geeignet hat sich ein Spaltmaß von 2,5 mm erwiesen.

Das zweite Werkzeug ist bevorzugt, auch zur Verringerung seines Gewichts, über einen wesentlichen Teil seiner radialen Erstreckung horizontal ausgerichtet. Der radial außen liegende Bereich des zweiten Werkzeugs verläuft hingegen nach einer vorteilhaften Ausbildung der Erfindung nach unten gebogen. Er folgt damit einerseits dem üblichen Verlauf eines als Knethaken ausgebildeten ersten Werkzeugs und leitet das von der Wandung der Rührschüssel abgestreifte Rührgut damit ferner in Richtung des Zentrums der Rührschüssel zurück. Die radial innen liegende Zone des zweiten Werkzeugs hingegen verläuft vorzugsweise tangential zum mit der Antriebseinrichtung kuppelbaren Schaft des ersten Werkzeugs, so dass das dort aufsteigende Rührgut zuverlässig abgestrichen und dem erneut dem Rührprozess zugeführt wird.

Zur Vereinfachung der Handhabung ist das zweite Werkzeug bevorzugt mittels einer lösbaren Kupplungseinrichtung, insbesondere einer Bajonettkupplung, mit der Antriebseinrichtung verbindbar und kann zur Reinigung oder bei einer das zweite Werkzeug nicht erfordernden Nutzung der Küchenmaschine problemlos entnommen werden. Alternativ könnte auch eine Gewindebuchse mit definiertem Endanschlag zum Einsatz kommen.

Da bei Ausführung der Erfindung aus rührtechnischen Erwägungen nicht unbedingt ein Deckel auf die Rührschüssel aufgesetzt werden muss, ist zwischen Kupplungseinrichtung und zweitem Werkzeug eine scheibenartige Sicherheitseinrichtung angeordnet. Die Sicherheitseinrichtung verhindert, dass bei Benutzung der erfindungsgemäßen Werkzeuganordnung Körperteile oder Gegenstände zwischen die sich zueinander drehenden Werkzeuge gelangen können und Verletzungen oder Beschädigungen hervorrufen.

Eine derartige Sicherheitseinrichtung ist bevorzugt drehfest mit dem zweiten Werkzeug verbunden und kann mit diesem entnommen und gereinigt werden. Die Wirkung ist bereits dann ausreichend gegeben, wenn der Radius der Sicherungseinrichtung dem 0,5 bis 0,7fachen des Radius der inneren Mantelfläche der Rührschüssel entspricht. Der Raumbedarf zur Lagerung oder Reinigung des entnommenen zweiten Werkzeugs nimmt durch Anbau der Sicherheitseinrichtung bei dieser Dimensionierung nur in geringem Maße zu, ohne dass die Wirkung der Sicherungseinrichtung beeinträchtigt wird. Der Abstand zwischen der Sicherheitseinrichtung und der unteren Kante des Knetflügels beträgt dabei mit Vorteil mindestens 15 mm, vorzugsweise 20 mm bis 30 mm. Hierdurch wird der Teig von der Kante der Sicherheitseinrichtung ferngehalten, so dass eine Förderung von Teig durch die Sicherheitseinrichtung zum Gehäuse der Küchenmaschine hin vermieden wird.

### Kurzbeschreibung der Figuren

Die Erfindung wird im Folgenden anhand schematischer Zeichnungen an mehreren Ausführungsbeispielen mit weiteren Einzelheiten näher erläutert.

Es zeigen:
- Fig. 1:: eine seitliche Ansicht einer Küchenmaschine mit einer ersten Werkzeuganordnung;
- Fig. 2:: eine perspektivische Ansicht der gleichen Küchenmaschine;
- Fig. 3:: eine andere perspektivische Ansicht auf die in Fig.1 und 2 gezeigten Werkzeuganordnung;
- Fig. 4, 5:: die Werkzeuganordnung nach Fig. 3 in anderen Relativpositionen der Werkzeuge in seitlicher Ansicht;
- Fig. 6:: eine weitere perspektivische Ansicht der Werkzeuganordnung nach Fig. 1 bis 5;
- Fig. 7:: verschiedene Ansichten des gesonderten zweiten Werkzeugs;
- Fig. 8:: die Küchenmaschine nach Fig. 1 bis 7 nach Entnahme des zweiten Werkzeugs;
- Fig. 9:: die perspektivische Ansicht einer anderen Küchenmaschine;
- Fig. 10:: eine Ansicht auf die in der Küchenmaschine nach Fig. 9 verwendete Werkzeuganordnung;
- Fig. 11:: die Küchenmaschine nach Fig. 9 und 10 nach Entnahme des zweiten Werkzeugs;
- Fig. 12:: eine Küchenmaschine nach einer Ausbildung der Erfindung in perspektivischer Ansicht;
- Fig. 13:: einen schräg nach oben gerichteten Blick auf die in Fig. 12 gezeigte Werkzeuganordnung.

### Ausführliche Beschreibung der Erfindung anhand mehrerer Ausführungsbeispiele

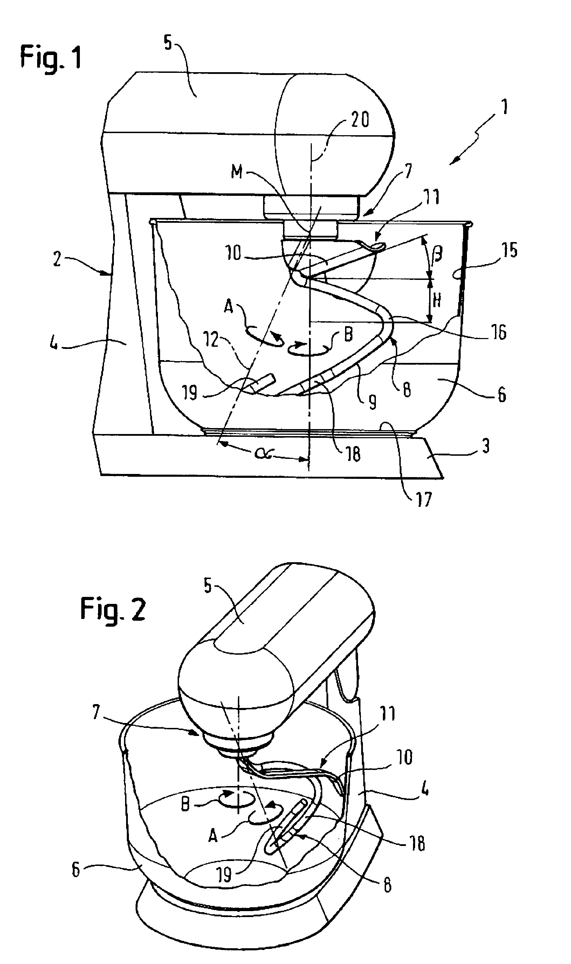

Die in den Figuren 1 bis 6 dargestellte Küchenmaschine 1 weist ein in seitlicher Ansicht näherungsweise C-förmiges Gehäuse 2 auf, das aus einem Fußteil 3, einem seitlichen Vertikalteil 4 und einem oberen Horizontalteil 5 besteht, das die elektrische Antriebseinrichtung der Küchenmaschine aufnimmt (Fig. 1).

In die von Fußteil 3 und Horizontalteil 5 aufgespannte Ausnehmung ist eine im Wesentlichen zylinderförmige Rührschüssel 6 eingesetzt, welche auf der Oberseite des Fußteils 3 aufliegt. Ein Drehantrieb, welcher die Rührschüssel 6 in Rotation versetzt, ist den Ausführungsbeispielen nicht vorgesehen, steht der Ausführung der Erfindung jedoch nicht entgegen.

Aus dem sich bis über das Zentrum der Rührschüssel 6 hinweg erstreckenden oberen Horizontalteil 5 des Gehäuses 2 ragt eine Kupplungseinrichtung 7 der Antriebseinrichtung nach unten ab, welche ein erstes Werkzeug 8 in Form eines Knethakens 9 sowie ein zweites, als Knetflügel 10 ausgebildetes Werkzeug 11 lösbar aufnimmt. Die Werkzeuge 8, 11 können zum Zwecke der Reinigung, Lagerung oder des Austausches gegen andere Bearbeitungsvorrichtungen von der Küchenmaschine 1 entfernt werden.

Der Knethaken 9 besteht aus einem gewendelten, biegesteifen Draht mit rundem Querschnitt, welcher um eine erste Drehachse 12 drehend in die Kupplungseinrichtung 7 eingesetzt ist. Der Querschnitt des Drahts kann alternativ auch oval, als Flachprofil oder als abgeflachtes Rundprofil ausgeführt werden. Die Drehachse 12 ist gegenüber der Vertikalen um einen Winkel α von etwa 22,5° geneigt. Bei Benutzung der Küchenmaschine 1 dreht der Knethaken 9 in Richtung des Pfeils A, in Aufsicht also bei diesem Ausführungsbeispiel entgegen dem Uhrzeigersinn. Vorteilhaft ist dabei, dass der Drehsinn von erstem Werkzeug 8 und zweitem Werkzeug 11 gegenläufig ist. Grundsätzlich könnten beide Werkzeuge 8, 11 also auch anders herum drehen.

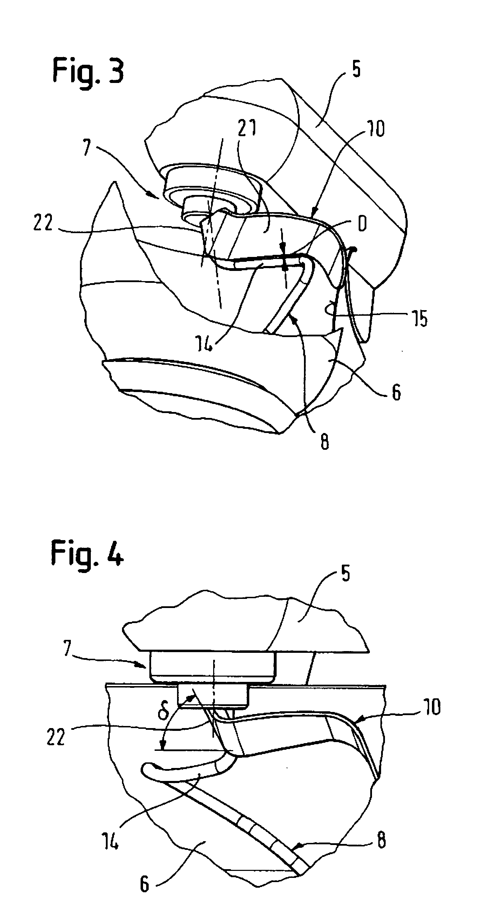

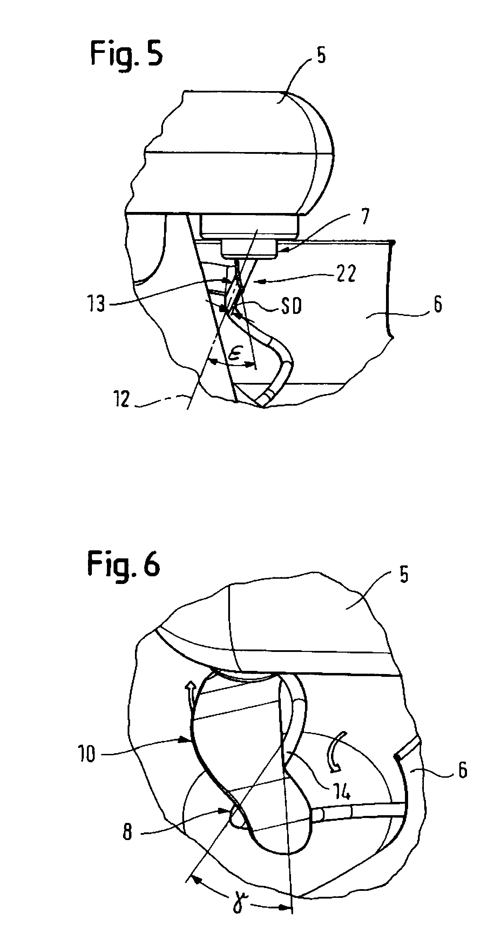

Der Knethaken 9 weist einen zum Einsetzen in die Kupplungseinrichtung 7 vorgesehenen und aus diesem teilweise in Richtung der Drehachse 12 herausragenden, insbesondere in Fig. 5 sichtbaren Schaft 13 auf. An diesen schließt sich ein näherungsweise horizontal verlaufender Bereich 14 an, der sich im Wesentlichen radial in Richtung der inneren Mantelfläche 15 der Rührschüssel 6 erstreckt (siehe Fig. 3, 4). Dieser läuft über einen nach unten gekrümmten Bogen 16 in einen schräg in Richtung des Bodens 17 der Rührschüssel 6 verlaufenden Bereich 18 des Knethakens 9 ein, bevor dieser unmittelbar oberhalb des Bodens 17 der Rührschüssel 6 einen wieder aufwärts gerichteten Haken 19 ausbildet.

Bei Benutzung der Küchenmaschine 1 vermischt der relativ langsam laufende, aber ein hohes Drehmoment aufweisende Knethaken 9 zunächst die noch gesonderten Bestandteile des Rührguts, beispielsweise Mehl, Zucker, Butter, Salz und Eier, und knetet diese zu einem hochviskosen, im Wesentlichen homogenen Teig aus.

Die Kupplungseinrichtung 7 nimmt ferner den um eine zweite, vertikale Drehachse 20 drehenden, bodenfernen Knetflügel 10 auf. Die Drehachse 20 des Knetflügels 10 verläuft koaxial zur Achse der Rührschüssel 6 und schneidet die geneigte Drehachse 12 des Knethakens 9 innerhalb der Kupplungseinrichtung 7 in einem Punkt M. Der Knetflügel 10 dreht dabei gegenläufig (Pfeil B) zum Knethaken 9, in Aufsicht also im Uhrzeigersinn. Es versteht sich, dass Knethaken 9 und Knetflügel 10 kollisionsfrei geformt und angeordnet sind, bei Benutzung der Küchenmaschine 1 also weder miteinander noch mit einer passenden Rührschüssel 6 kollidieren. In der Parkposition der Küchenmaschine 1 wird der Knetflügel 10 bei in Ausgangsstellung befindlichem Knethaken 9 von der Achse des Motorantriebs aus rechtwinklig zur Seite gestellt, so dass das obere Horizontalteil 5 des Gehäuses 2 angehoben werden kann, ohne dass die Werkzeuge 8, 11 an die innere Mantelfläche 15 der Rührschüssel 6 anstoßen.

Der Knetflügel 10 besteht im Wesentlichen aus einem sich radial in Richtung der Mantelfläche 15 erstreckenden, flachen Zentralteil 21, das eine geringe Dicke, aber eine deutlich größere Tiefe aufweist. Beim Kneten taucht der Bogen 16 des Knethakens 9 etwa um die Höhe H (Fig. 1) in den Teig ein und drückt diesen um den Betrag 2xH nach oben. Das Zentralteil 21 verläuft im Wesentlichen horizontal, ist jedoch derart angestellt, dass es bei seiner Drehung auftreffendes Rührgut wieder nach unten befördert. Der Winkel β der Anstellung beträgt vorzugsweise zwischen 5° und 45° und liegt insbesondere bei etwa 30°.

Der bei Überdeckung des ersten und zweiten Werkzeugs 8, 11 auftretende geringste Abstand D (Fig. 3) zwischen dem Zentralteil 21 des Knetflügels 10 und dem dazu parallel verlaufenden Bereich 14 des Knethakens 9 beträgt im Ausführungsbeispiel 2,5 mm. Dieser Spalt ist ausreichend, um auch unter Belastung eine Kollision zwischen Knethaken 9 und Knetflügel 10 sicher zu vermeiden. Anderseits kann der Knetflügel 10 an der Oberseite des Bereichs 14 des Knethakens 9 anhaftendes Rührgut weitgehend abstreifen und dem Rührprozess erneut zuführen. Das Gegeneinander von Knethaken 9 und Knetflügel 10 verläuft dabei scherenartig, wie im nächsten Ausführungsbeispiel beschrieben.

Wie insbesondere aus Fig. 4 ersichtlich, läuft der Knetflügel 10 im Bereich der Kupplungseinrichtung 7 in einer Zone 22 tangential gegen den Schaft 13 des Knetflügels 9. In der Zone 22 ist er gegenüber der Waagerechten um einen Winkel δ von 20° bis 70°, im Ausführungsbeispiel von rund 50°, angestellt (Fig. 4). Die innere Kante der Zone 22 ist ferner um einen Steigungswinkel ε geneigt und gegenüber dem Schaft 8 des Knethakens 8 mit einem Spalt SD von 0,5 mm bis 2 mm, im Ausführungsbeispiel von etwa 1 mm, beabstandet (Fig. 5). Bei gegenläufiger Drehung von Knethaken 9 und Knetflügel 10 windet sich die tangentiale Zone 22 des Knetflügels 10 um den Schaft 13 des Knethakens 9 und streift dabei am Schaft 13 aufsteigendes Rührgut in Richtung der Rührschüssel 6 ab.

Der radial außenliegende Bereich 23 des Knetflügels 10 krümmt sich, der Kontur des Bogens 16 des Knethakens 9 äquidistant folgend, nach unten und verläuft mit seinem Ende unmittelbar an der inneren Mantelfläche 15 der Rührschüssel 6. Bei seiner Drehung relativ zu Knethaken 9 und Rührschüssel 6 entfernt er somit an beiden anhaftendes Rührgut.

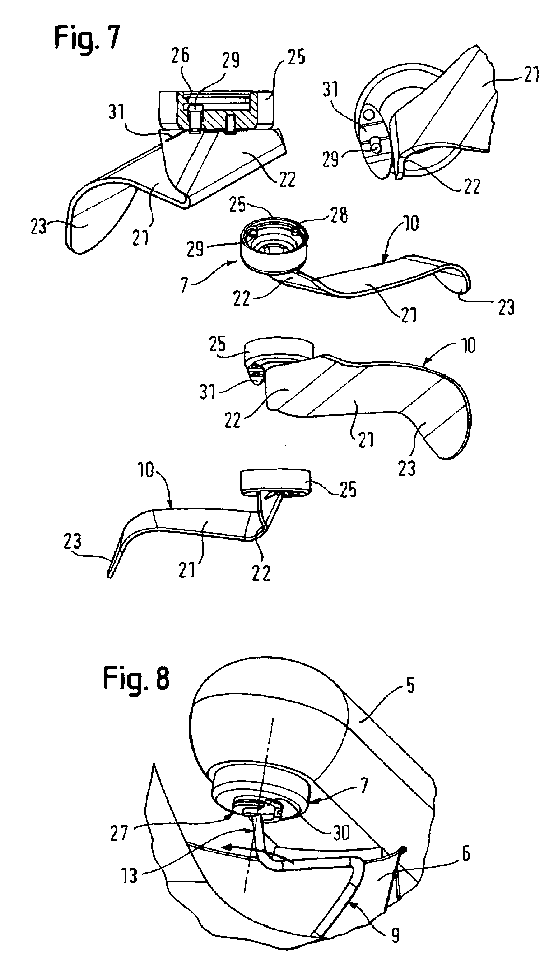

Durch das Zusammenwirken von erstem Werkzeug 8 und zweitem Werkzeug 11, insbesondere unter Verwendung einer passenden Rührschüssel 6, wird somit innerhalb angemessener Zeit ein gutes Rührergebnis erzielt. Ferner wird ein Austreten des Rührguts aus der Rührschüssel 6 zuverlässig vermieden, so dass die Rührschüssel 6 beim Betreiben der Küchenmaschine nicht mit einem Deckel verschlossen werden muss. Wie aus Fig. 7 und 8 ersichtlich, ist der den Knetflügel 10 haltende Teil der Kupplungseinrichtung 7 als Bajonettkupplung 24 ausgeführt, welche eine drehfest mit dem Knetflügel 10 verbundene, topfförmigen Nabe 25 aufweist. Diese ist innenseitig mit Vorsprüngen 26 versehen und auf ein passendes Formstück 27 am oberen Horizontalteil 5 des Gehäuses 2 aufsetzbar. Beim Verdrehen von Nabe 25 und Formstück 27 zueinander bis zum Erreichen eines bolzenartigen Endanschlags 28 rastet ein Sperrstift 29 in eine Ausnehmung 30 des Formstücks 27 ein. Der Sperrstift 29 ist mittels einer Blattfeder 31 an der Nabe 25 befestigt und in Richtung seiner Sperrstellung vorgespannt. Durch Ziehen am auskragenden Ende der Blattfeder 31 wird der Sperrstift 29 entriegelt, so dass der Knetflügel 10 gelöst werden kann.

Der Knetflügel 10 kann durch Stanzen und Biegen aus Stahlblech gefertigt und mit der gleichfalls aus Stahl bestehenden Nabe 25 verschweißt werden. Alternativ ist die Herstellung als metallisches Druckguß- oder Schmiedeteil (beispielsweise aus Stahl oder Aluminium) oder als komplex gestaltetes Kunststoff-Spritzgießteil, auch einstückig mit der Nabe 25, denkbar.

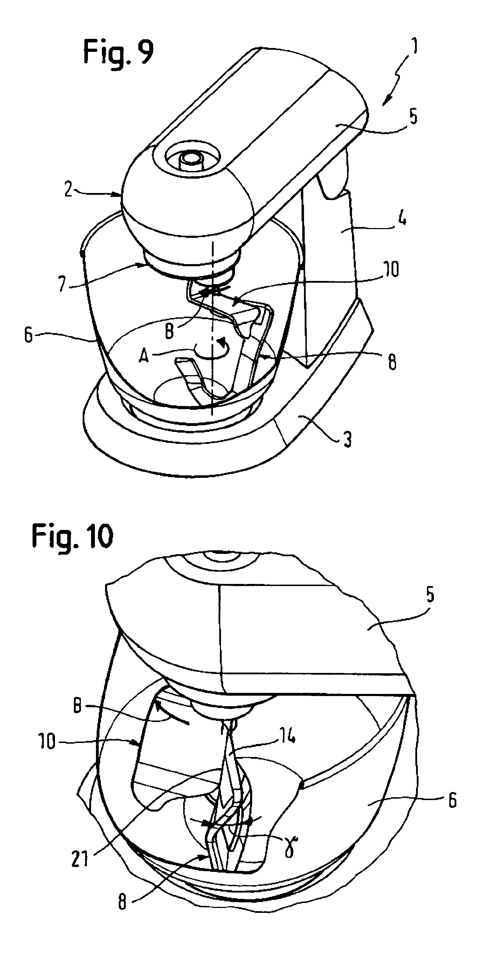

Bei dem Ausführungsbeispiel nach Fig. 9 bis 11 ist der Knethaken 9 aus einem abgeplatteten Stahlprofil gebildet, welches exzentrisch zur vertikalen Drehachse 12 in die Kupplungseinrichtung 7 eingesetzt ist. Die Drehachse 20 des Knetflügels 10 ist um den gleichen Betrag versetzt zur Drehachse 12 ausgerichtet und verläuft zu dieser parallel.

Die Ausformung des Knethakens 9 und des Knetflügels 10 entsprechen im Übrigen im Wesentlichen dem zuvor beschrieben Ausführungsbeispiel. Um zu vermeiden, dass das Antriebsdrehmoment von Knethaken 9 und Knetflügel 10 bei deren Überdeckung schlagartig ansteigt, verlaufen die Vorderkante des Zentralteils 21 und der Bereich 14 des Knethakens 9 in Aufsicht um einen Winkel zwischen 5° und 30°, im Ausführungsbeispiel von etwa 20°, schräg zueinander (Winkel χ). Durch diese Ausbildung treffen die entsprechenden Bereiche von Knethaken 9 und Knetflügel 10 scherenartig aufeinander.

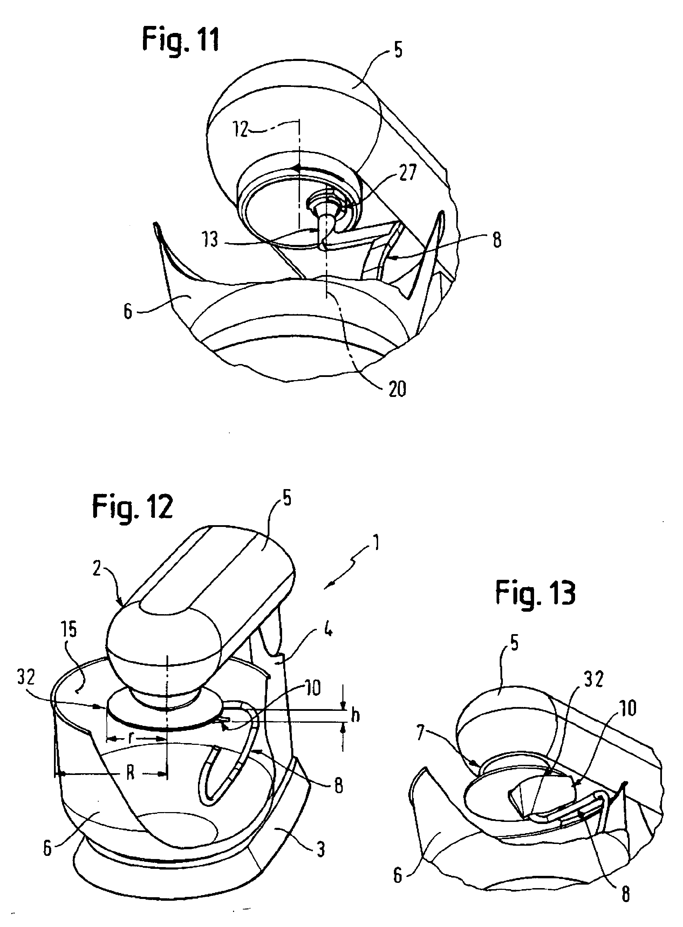

Bei der in den Figuren 12 und 13 gezeigten Werkzeuganordnung ist der Knetflügel 10 mit einer scheibenartigen Sicherheitseinrichtung 32 ausgestattet, welche oberhalb des Knetflügels 10 koaxial zu dessen Drehachse 20 angeordnet ist. Die Sicherheitseinrichtung 32 ist drehfest mit dem Knetflügel 10 verbunden und kann gemeinsam mit diesem montiert oder entnommen werden. Der Radius r der Sicherheitseinrichtung 32 beträgt im Ausführungsbeispiel etwa das 0,54fache des Radius der inneren Mantelfläche 15 der zylinderförmigen Rührschüssel 6. Damit werden Finger oder Gegenstände stets vom rotierenden Knethaken 8 weggeleitet. Ebenso ist ein ausreichender Sicherheitsraum gegen ein Quetschen zwischen der inneren Mantelfläche 15 der Rührschüssel 6 und dem radial außen liegenden Bereich 23 des Knetflügels 10 gegeben. Der Abstand h zwischen der Sicherheitseinrichtung 32 und der unteren Kante des Knetflügels 10 beträgt dabei etwa 25 mm. Hierdurch wird der Teig von der Kante der Sicherheitseinrichtung ferngehalten, so dass eine Förderung von Teig durch die Sicherheitseinrichtung zum Gehäuse der Küchenmaschine hin vermieden wird.

Die in der vorstehenden Beschreibung, den Ansprüchen und den Zeichnungen offenbarten Merkmale können sowohl einzeln als auch in beliebiger Kombination für die Verwirklichung der Erfindung wie in den Ansprüchen definiert, in ihren verschiedenen Ausgestaltungen von Bedeutung sein.

### Bezugszeichen

- 1: Küchemaschine
- 2: Gehäuse
- 3: Fußteil
- 4: Vertikalteil
- 5: Horizontalteil
- 6: Rührschüssel
- 7: Kupplungseinrichtung
- 8: (erstes) Werkzeug
- 9: Knethaken
- 10: Knetflügel
- 11: (zweites) Werkzeug
- 12: Drehachse (des Knethakens)
- 13: Schaft
- 14: (horizontaler) Bereich
- 15: Mantelfläche (der Rührschüssel)
- 16: Bogen
- 17: Boden (der Rührschüssel)
- 18: (schräg verlaufender) Bereich
- 19: Haken
- 20: Drehachse (des Knetflügels)
- 21: Zentralteil
- 22: (tangentiale) Zone
- 23: (radial außenliegender) Bereich
- 24: Bajonettkupplung
- 25: Nabe
- 26: Vorsprung
- 27: Formstück
- 28: Endanschlag
- 29: Sperrstift
- 30: Ausnehmung
- 31: Blattfeder
- 32: Sicherheitseinrichtung
- A: Pfeil (Drehrichtung des Knethakens)
- B: Pfeil (Drehrichtung des Knetflügels)
- D: Abstand
- h: Abstand
- H: Teighöhe
- M: Schnittpunkt
- r: Radius (der Sicherheitseinrichtung)
- R: Radius (der inneren Mantelfläche der Rührschüssel)
- SD: Spalt

- α: Winkel (Neigung der Drehachse 12)
- β: Winkel (der Anstellung des Zentralteils 21 des Knetflügels)
- χ: Winkel (der Scherenstellung)
- δ: Winkel (Anstellung der Zone 22 des Knetflügels)
- ε: Steigungswinkel

## Patentansprüche

1. Küchenmaschine (1) mit einer Antriebseinrichtung und einer Werkzeuganordnung, insbesondere zum Kneten von Teig, mit einem ersten Werkzeug (8), welches mittels seines Schaftes (13) um eine erste Drehachse (12) drehend mit der Antriebseinrichtung der Küchenmaschine (1) gekuppelt ist, wobei die Werkzeuganordnung ein zweites Werkzeug (11) umfasst, welches im Bereich des Schaftes (13) des ersten Werkzeugs (8) angeordnet ist, **dadurch gekennzeichnet, dass** zwischen Kupplungseinrichtung (7) der Antriebseinrichtung und zweitem Werkzeug (11) eine scheibenartige Sicherheitseinrichtung (32) angeordnet ist.

2. Küchenmaschine nach Anspruch 1, **dadurch gekennzeichnet, dass** das erste Werkzeug (8) haken- oder wendelartig ausgebildet ist.

3. Küchenmaschine nach Anspruch 1 oder 2, **dadurch gekennzeichnet, dass** das zweite Werkzeug (11) flügelartig ausgebildet ist.

4. Küchenmaschine nach einem der Ansprüche 1 bis 3, **dadurch gekennzeichnet, dass** das zweite Werkzeug (11) drehend mit der Antriebseinrichtung der Küchenmaschine (1) gekuppelt ist.

5. Küchenmaschine nach Anspruch 4, **dadurch gekennzeichnet, dass** das zweite Werkzeug (11) um eine von der ersten Drehachse (12) abweichende zweite Drehachse (20) drehend ist.

6. Küchenmaschine nach Anspruch 5, **dadurch gekennzeichnet, dass** die erste Drehachse (12) und die zweite Drehachse (20) einander kreuzend ausgerichtet sind.

7. Küchenmaschine nach Anspruch 5, **dadurch gekennzeichnet, dass** das zweite Werkzeug (11) um eine zur ersten Drehachse (12) parallel versetzte zweite Drehachse (20) drehend ist.

8. Küchenmaschine nach einem der Ansprüche 4 bis 7, **dadurch gekennzeichnet, dass** das erste Werkzeug (8) und das zweite Werkzeug (11) gegenläufig drehend vorgesehen sind.

9. Küchenmaschine nach einem der vorhergehenden Ansprüche, **dadurch gekennzeichnet, dass** sich das zweite Werkzeug (11) vom Zentrum der Rührschüssel (6) der Küchenmaschine bis zur deren innerer Mantelfläche (15) erstreckt.

10. Küchenmaschine nach einem der vorhergehenden Ansprüche, **dadurch gekennzeichnet, dass** ein oberer Bereich des ersten Werkzeugs (8) und die Unterseite des zweiten Werkzeugs (11) in einer Drehstellung näherungsweise parallel zueinander verlaufen.

11. Küchenmaschine nach Anspruch 10, **dadurch gekennzeichnet, dass** das zweite Werkzeug (11) über einen wesentlichen Teil seiner radialen Erstreckung horizontal ausgerichtet ist.

12. Küchenmaschine nach Anspruch 11, **dadurch gekennzeichnet, dass** der radial außen liegende Bereich (23) des zweiten Werkzeugs (11) nach unten gebogen verläuft.

13. Küchenmaschine nach Anspruch 11 oder 12, **dadurch gekennzeichnet, dass** die radial innen liegende Zone (22) des zweiten Werkzeugs (11) tangential zum mit der Antriebseinrichtung kuppelbaren Schaft (13) des ersten Werkzeugs (8) verläuft.

14. Küchenmaschine nach einem der vorhergehenden Ansprüche, **dadurch gekennzeichnet, dass** das zweite Werkzeug (11) mittels einer lösbaren Kupplungseinrichtung (7), insbesondere einer Bajonettkupplung (24), mit der Antriebseinrichtung verbindbar ist.

15. Küchenmaschine nach Anspruch 14, **dadurch gekennzeichnet, dass** die Sicherheitseinrichtung (32) drehfest mit dem zweiten Werkzeug (11) verbunden ist.

16. Küchenmaschine nach Anspruch 14 oder 15, **dadurch gekennzeichnet, dass** der Radius (r) der Sicherungseinrichtung (32) dem 0,5 bis 0,7fachen des Radius (R) der inneren Mantelfläche (15) der Rührschüssel (6) entspricht.

17. Küchenmaschine nach einem der Ansprüche 14 bis 16, **dadurch gekennzeichnet, dass** der Abstand (h) zwischen der Sicherungseinrichtung (32) und der unteren Kante des Knetflügels (10) mindestens 15 mm, vorzugsweise 20 mm bis 30 mm beträgt.

## Claims

1. Food processor (1) with a drive device and a tool arrangement, particularly for kneading dough, with a first tool (8), which is coupled by means of its shank (13) with the drive device of the food processor (1) for rotation about a first axis (12) of rotation, wherein the tool arrangement comprises a second tool (11) arranged in the region of the shank (13) of the first tool (8), **characterised in that** a disc-like safety device (32) is arranged between coupling device (7) of the drive device and second tool (11).

2. Food processor according to claim 1, **characterised in that** the first tool (8) is constructed to be hook-like or helical.

3. Food processor according to claim 1 or 2, **characterised in that** the second tool (11) is constructed to be blade-like.

4. Food processor according to any one of claims 1 to 3, **characterised in that** second tool (11) is rotatably coupled with the drive device of the food processor (1).

5. Food processor according to claim 4, **characterised in that** the second tool (11) is rotatable about a second axis (20) of rotation differing from the first axis (12) of rotation.

6. Food processor according to claim 5, **characterised in that** the first axis (12) of rotation and the second axis (20) of rotation are oriented to cross one another.

7. Food processor according to claim 5, **characterised in that** the second tool (11) is rotatable about a second axis (20) of rotation offset parallelly relative to the first axis (12) of rotation.

8. Food processor according to any one of claims 4 to 7, **characterised in that** the first tool (8) and the second tool (11) are provided to rotate in opposite sense.

9. Food processor according to any one of the preceding claims, **characterised in that** the second tool (11) extends from the centre of the mixing bowl (6) of the food processor to the inner circumferential surface (15) thereof.

10. Food processor according to any one of the preceding claims, **characterised in that** an upper region of the first tool (8) and the underside of the second tool (11) extend approximately parallel to one another in one rotational setting.

11. Food processor according to claim 10, **characterised in that** the second tool (11) is oriented horizontally over a substantial part of the radial extent thereof.

12. Food processor according to claim 11, **characterised in that** the radially outwardly disposed region (23) of the second tool (11) is curved in downward direction.

13. Food processor according to claim 11 or 12, **characterised in that** the radially inwardly disposed zone (22) of the second tool (11) extends tangentially with respect to the shank (13), which can be coupled with the drive device, of the first tool (8).

14. Food processor according to any one of the preceding claims, **characterised in that** the second tool (11) is connectible with the drive device by means of a releasable coupling device (7), particularly a bayonet coupling (24).

15. Food processor according to claim 14, **characterised in that** the safety device (32) is connected with the second tool (11) to be secure against relative rotation.

16. Food processor according to claim 14 or 15, **characterised in that** the radius (r) of the safety device (32) corresponds with 0.5 to 0.7 times the radius (R) of the inner circumferential surface (15) of the mixing bowl (6).

17. Food processor according to any one of claims 14 to 16, **characterised in that** the spacing (h) between the safety device (32) and the lower edge of the kneading blade (10) is at least 15 millimetres, preferably 20 millimetres to 30 millimetres.

## Revendications

1. Robot ménager (1) muni d'un dispositif d'entraînement et d'un agencement d'outils, notamment pour pétrir de la pâte, comprenant un premier outil (8) lequel, au moyen de sa tige (13), est couplé au dispositif d'entraînement du robot ménager (1) en tournant autour d'un premier axe de rotation (12), l'agencement d'outils comprenant un deuxième outil (11), lequel est disposé dans la partie de la tige (13) du premier outil (8), **caractérisé en ce qu'**un dispositif de sécurité (32) en forme de disque est disposé entre le dispositif d'accouplement (7) du dispositif d'entraînement et le deuxième outil (11).

2. Robot ménager selon la revendication 1, **caractérisé en ce que** le premier outil (8) est réalisé en forme de crochet ou de spirale.

3. Robot ménager selon la revendication 1 ou 2, **caractérisé en ce que** le deuxième outil (11) est réalisé en forme de pale.

4. Robot ménager selon l'une quelconque des revendications 1 à 3, **caractérisé en ce que** le deuxième outil (11) est couplé au dispositif d'entraînement du robot ménager (1) en tournant.

5. Robot ménager selon la revendication 4, **caractérisé en ce que** le deuxième outil (11) est rotatif autour d'un deuxième axe de rotation (20) différent du premier axe de rotation (12).

6. Robot ménager selon la revendication 5, **caractérisé en ce que** le premier axe de rotation (12) et le deuxième axe de rotation (20) sont conçus en se croisant mutuellement.

7. Robot ménager selon la revendication 5, **caractérisé en ce que** le deuxième outil (11) est rotatif autour d'un deuxième axe de rotation (20) décalé en parallèle au premier axe de rotation (12).

8. Robot ménager selon l'une quelconque des revendications 4 à 7, **caractérisé en ce que** le premier outil (8) et le deuxième outil (11) sont ménagés en tournant en sens inverse.

9. Robot ménager selon l'une quelconque des revendications précédentes, **caractérisé en ce que** le deuxième outil (11) s'étend du centre du récipient mélangeur (6) du robot ménager jusqu'à l'aire latérale intérieure de celui-ci.

10. Robot ménager selon l'une quelconque des revendications précédentes, **caractérisé en ce qu'**une partie supérieure du premier outil (8) et le côté inférieur du deuxième outil (11) s'étendent approximativement parallèlement l'un à l'autre dans une position de rotation.

11. Robot ménager selon la revendication 10, **caractérisé en ce que** le deuxième outil (11) est orienté horizontalement sur une partie essentielle de son étendue radiale.

12. Robot ménager selon la revendication 11, **caractérisé en ce que** la zone (23) du deuxième outil (11), située radialement à l'extérieur, s'étend en étant courbée vers le bas.

13. Robot ménager selon la revendication 11 ou 12, **caractérisé en ce que** la zone (22) du deuxième outil (11), située radialement à l'intérieur, s'étend tangentiellement à la tige (13) du premier outil (8), pouvant être couplée au dispositif d'entraînement.

14. Robot ménager selon l'une quelconque des revendications précédentes, **caractérisé en ce que** le deuxième outil (11) est raccordable au dispositif d'entraînement au moyen d'un dispositif d'accouplement amovible (17), notamment d'un raccord à baïonnette (24).

15. Robot ménager selon la revendication 14, **caractérisé en ce que** le dispositif de sécurité (32) est raccordé au deuxième outil (11) de manière résistante à la torsion.

16. Robot ménager selon la revendication 14 ou 15, **caractérisé en ce que** le rayon (r) du dispositif de sécurité (32) correspond à 0,5 jusqu'à 0,7 fois le rayon (R) de l'aire latérale intérieure (15) du récipient mélangeur (6).

17. Robot ménager selon l'une quelconque des revendications 14 à 16, **caractérisé en ce que** la distance (h) entre le dispositif de sécurité (32) et le bord inférieur de la pale de pétrissage (10) est au moins de 15 mm, de préférence de 20 mm à 30 mm.
